# FASCICULE DE BREVET EUROPEEN

(11) **EP 3 900 178 B1**
(45) Date de publication et mention de la délivrance du brevet: **07.06.2023**
(21) Numéro de dépôt: 19829611.3
(22) Date de dépôt: 20.12.2019
(51) Int. Cl.: H02P 29/024, H02P 9/10, H02P 9/48

(54) **PROCÉDÉ DE COMMANDE D'UNE MACHINE ÉLECTRIQUE TOURNANTE FONCTIONNANT EN GÉNÉRATRICE ET SYSTÈME DE COMMANDE CORRESPONDANT POUR BAISSER LA TENSION DANS LE RÉSEAU EN CAS DE DÉLESTAGE**
VERFAHREN ZUR STEUERUNG EINER ALS GENERATOR ARBEITENDEN ELEKTRISCHEN ROTATIONSMASCHINE UND ENTSPRECHENDES STEUERUNGSSYSTEM ZUR REDUZIERUNG DER SPANNUNG IM NETZ BEI EINER ABSCHALTUNG
METHOD FOR CONTROLLING AN ELECTRIC ROTARY MACHINE OPERATING AS A GENERATOR AND CORRESPONDING CONTROL SYSTEM FOR REDUCING THE VOLTAGE IN THE NETWORK IN THE EVENT OF A CUTOFF

(30) Priorité: 20.12.2018 FR 1873609
(43) Date de publication de la demande: 27.10.2021
(73) Titulaire: VALEO EQUIPEMENTS ELECTRIQUES MOTEUR, 94046 Créteil Cedex (FR)
(72) Inventeur: CAVES, Laurent, 94046 CRETEIL CEDEX (FR); FILIPE, Raphaël, 94046 CRETEIL CEDEX (FR); CHEMIN, Michaël, 94046 CRETEIL CEDEX (FR)
(74) Mandataire: Valeo Powertrain Systems
(86) Numéro de dépôt international: PCT/EP2019/086768
(87) Numéro de publication internationale: WO 2020/128024

(56) Documents cités:
- DE-A1-102014 214 639
- DE-A1-102016 202 169
- FR-A1- 2 975 241
- JP-A- 2002 010 694

## Description

La présente invention concerne un procédé de commande d'une machine électrique tournante polyphasée connectée à un réseau électrique, notamment un réseau de bord d'un véhicule automobile, en cas de délestage de charge, ainsi qu'un système de commande adapté à la mise en oeuvre de ce procédé.

L'invention concerne aussi un système électrique comprenant ce système de commande et une machine électrique tournante polyphasée commandée par ce système de commande.

Dans un véhicule automobile, le réseau de bord sert à alimenter les différents équipements électriques dont est équipé le véhicule. L'alimentation est fournie par au moins une batterie. Celle-ci est rechargée grâce à une machine électrique tournante, à partir de l'énergie fournie par la rotation du moteur thermique du véhicule. Par machine électrique tournante, on entend de façon générale toute machine électrique tournante polyphasée utilisée pour la production de courant continu de sortie alimentant le réseau de bord. Il peut en particulier s'agir d'un alternateur ou encore d'un alterno-démarreur.

En cas de déconnexion brutale d'une charge électrique du réseau de bord, de la batterie ou des deux, il se crée un phénomène de délestage de charge (en anglais « load dump ») qui occasionne une surtension sur le réseau de bord. En effet, la machine ne réagissant pas instantanément au délestage de charge, celle-ci continue à délivrer le même courant de sortie alors que la consommation en courant du côté du réseau de bord à chutée. Par conséquent, tous les condensateurs reliés au réseau de bord se chargent et la tension continue sur le réseau de bord monte de façon importante.

Une telle surtension peut endommager ou réduire la fiabilité non seulement de la machine électrique tournante elle-même mais aussi d'éventuelles appareils électriques connectés sur le réseau de bord.

Il convient donc de détecter de telles surtensions de forte amplitude et le cas échéant de mettre la machine électrique tournante en sécurité.

Pour ce faire, il est connu de l'état de la technique (voir DE 10 2014 214639 A1) un procédé de commande d'une machine électrique tournante polyphasée, ledit procédé de commande étant du type de ceux consistant à court-circuiter au moins un enroulement de phase du stator en cas de délestage de charge, ledit procédé comprenant une étape de mise en court-circuit dudit au moins un enroulement de phase du stator lorsque la tension dudit réseau dépasse une première valeur prédéterminée.

Cette méthode simple de l'état de la technique permet de faire baisser la tension sur le réseau de bord en maintenant au moins une phase du stator en court-circuit tant que cette tension n'est pas revenue à un niveau acceptable.

Toutefois, il peut s'écouler un temps non négligeable avant que la tension sur le réseau de bord ne revienne à un niveau acceptable.

L'invention a pour but de pallier au moins en partie à cet inconvénient.

A cet effet, l'invention concerne, selon un premier aspect, un procédé de commande selon la revendication 1.

II est à noter qu'au sens de l'invention, l'intensité est positive lorsque le courant s'écoule ou rentre dans ledit au moins enroulement court-circuitée depuis ledit point milieu connecté à ledit au moins un enroulement court-circuité.

Ainsi, le procédé de commande selon l'invention est du type de ceux consistant à court-circuiter au moins un enroulement de phase du stator en cas de délestage de charge.

Le procédé de commande selon l'invention peut également présenter une ou plusieurs des caractéristiques ci-dessous, considérées individuellement ou selon toutes les combinaisons techniquement possibles.

Ce procédé est remarquable en ce que le pont de commande du stator est commandé lorsque qu'au moins un enroulement de phase du stator est court-circuité, de sorte à injecter du courant provenant du réseau de bord dans l'enroulement de phase du stator préalablement court-circuite afin de faire baisser la tension sur le réseau de bord.

Dans un mode particulier de réalisation de l'invention, au cours de l'étape de mise en court-circuit d'au moins un enroulement de phase du stator, l'interrupteur de côté haut dudit bras de commutation activé est actionné en position ouverte.

Dans un mode particulier de réalisation de l'invention, au cours de l'étape de mise en court-circuit d'au moins un enroulement de phase du stator, l'interrupteur de côté haut dudit bras de commutation activé est actionné en position ouverte avant que l'interrupteur de côté bas dudit bras de commutation activé soit actionné en position fermée.

Dans un mode particulier de réalisation de l'invention, au cours de l'étape de mise en court-circuit d'au moins un enroulement de phase du stator, tous les enroulements de phase dudit stator sont mis en cours circuit et tous les interrupteurs de côté haut de tous les bras de commutation sont actionnés en position ouverte.

Dans un mode particulier de réalisation de l'invention, la mesure de la tension dudit réseau est obtenue par filtrage de la tension dudit réseau avec une constante de temps prédéterminée.

Dans un mode particulier de réalisation de l'invention, l'étape d'activation est répétée au moins jusqu'à ce que la tension mesurée par le dispositif de mesure de tension soit inférieure à une deuxième valeur prédéterminée.

Dans un mode particulier de réalisation de l'invention, ladite étape d'activation est répétée pendant une période temporelle prédéterminée.

Dans un mode particulier de réalisation de l'invention, tous les enroulements de phase du stator sont court-circuités lors de l'étape de court-circuit et successivement à l'étape de mise en court-circuit, l'étape d'activation est réalisée pour tous les bras de commutation.

Corrélativement l'invention vise, selon un deuxième aspect, un système de commande selon la revendication 6.

Dans un mode particulier de réalisation de l'invention, le circuit de commande ferme l'interrupteur de côté bas du bras de commutation prédéterminé et met en court-circuit ledit au moins un enroulement de phase prédéterminé du stator.

Dans un mode particulier de réalisation de l'invention, le circuit de commande ferme l'interrupteur de côté bas du bras de commutation prédéterminé, met en court-circuit ledit au moins un enroulement de phase prédéterminé du stator et l'interrupteur de côté haut dudit bras de commutation prédéterminé est actionné en position ouverte avant que l'interrupteur de côté bas dudit bras de commutation prédéterminé soit actionné en position fermée.

Dans un mode particulier de réalisation de l'invention, le circuit de commande ferme l'interrupteur de côté bas du bras de commutation prédéterminé, met en court-circuit tous les enroulements de phase du stator et tous les interrupteurs de côté haut de tous les bras de commutation du pont de commande sont actionnés en position ouverte avant que tous les interrupteurs de côté bas de tous les bras de commutation soit actionnés en position fermée.

Dans un mode particulier de réalisation de l'invention, suite à une détection que la tension mesurée par le dispositif de mesure de la tension dépasse une première valeur prédéterminée et de façon itérative pendant une période prédéterminée ou tant que la tension mesurée par le dispositif de mesure de la tension dépasse une deuxième valeur prédéterminée :
- le circuit de commande ferme l'interrupteur de côté bas du bras de commutation prédéterminé,
- le dispositif de mesure du courant mesure le courant parcourant la phase prédéterminée,
- si l'intensité du courant mesurée est positive, le circuit de commande ferme l'interrupteur de côté haut du bras de commutation prédéterminé,
- sinon, le circuit de commande ouvre l'interrupteur de côté haut du bras de commutation prédéterminé.

Dans un mode particulier de réalisation de l'invention, suite à une détection que la tension mesurée par le dispositif de mesure de la tension dépasse une première valeur prédéterminée et à la mise en court-circuit de l'enroulement de phase prédéterminé, le système de commande de façon itérative pendant une période prédéterminée ou tant que la tension mesurée par le dispositif de mesure de la tension dépasse une deuxième valeur prédéterminée :
- le dispositif de mesure du courant mesure le courant parcourant la phase prédéterminée,
- si l'intensité du courant mesurée est positive, le circuit de commande ouvre l'interrupteur de côté bas du bras de commutation prédéterminé et ferme l'interrupteur de côté haut du bras de commutation prédéterminé,
- sinon, le circuit de commande ouvre l'interrupteur de côté haut du bras de commutation prédéterminé et ferme l'interrupteur de côté bas du bras de commutation prédéterminé.

Dans un mode particulier de réalisation de l'invention, suite à une détection que la tension mesurée par le dispositif de mesure de la tension dépasse une première valeur prédéterminée et de façon itérative pendant une période prédéterminée ou tant que la tension mesurée par le dispositif de mesure de la tension dépasse une deuxième valeur prédéterminée :
- le dispositif de mesure du courant mesure le courant parcourant la phase prédéterminée,
- si l'intensité du courant mesurée correspond à un courant entrant dans la phase prédéterminée depuis le pont milieu connecté à ladite phase prédéterminée, le circuit de commande ouvre l'interrupteur de côté bas du bras de commutation prédéterminé et ferme l'interrupteur de côté haut du bras de commutation prédéterminé,
- sinon, le circuit de commande ouvre l'interrupteur de côté haut du bras de commutation prédéterminé et ferme l'interrupteur de côté bas du bras de commutation prédéterminé.

Dans un mode particulier de réalisation de l'invention, le système de commande est caractérisé en ce qu'il comprend en outre pour chaque phase un dispositif de mesure du courant parcourant cette phase et en ce que pour chaque phase :
- le circuit de commande ferme l'interrupteur de côté bas du bras de commutation connecté par son point milieu à cette phase et ouvre l'interrupteur de côté haut du bras de commutation connecté par son point milieu à cette phase,
- le dispositif de mesure du courant mesure le courant parcourant cette phase,
- si l'intensité du courant mesurée dans cette phase correspond à un courant entrant dans cette phase depuis le point milieu connecté à cette phase, le circuit de commande ferme l'interrupteur de côté haut du bras de commutation connecté par son point milieu à cette phase et ouvre l'interrupteur de côté bas du bras de commutation connecté par son point milieu à cette phase,
- sinon, le circuit de commande ouvre l'interrupteur de côté haut du bras de commutation connecté par son point milieu à cette phase et ferme l'interrupteur de côté bas du bras de commutation connecté par son point milieu à cette phase.

Le système de commande bénéficie des mêmes avantages, cités précédemment, que le procédé de commande.

L'invention vise également, selon un troisième aspect un système électrique comprenant un système de commande selon le deuxième aspect de l'invention et une machine électrique tournante polyphasée et à rotor bobiné commandée par ledit système de commande.

Le système électrique bénéficie des mêmes avantages, cités précédemment, que le procédé de commande et le système de commande.

L'invention vise également, selon un quatrième aspect, un système de commande d'une machine électrique tournante polyphasée fonctionnant en génératrice et reliée à un réseau électrique par une première et une deuxième borne d'alimentation, ledit réseau électrique étant notamment un réseau de bord d'un véhicule automobile, ledit système de commande comprenant :
- un pont de commande comprenant une pluralité de bras de commutation montés en parallèle, chaque bras comprenant un interrupteur de côté haut et un interrupteur de côté bas connectés l'un à l'autre en un point milieu lui-même connecté à un enroulement de phase de ladite machine électrique tournante, ledit pont de commande étant apte à alimenter en tension ledit réseau électrique,
- un circuit de commande apte à ouvrir ou à fermer les interrupteurs du pont de commande,
- un dispositif de mesure de la tension entre la première et la deuxième borne d'alimentation,
le système de commande est caractérisé en ce que, pour au moins un enroulement de phase prédéterminé et relié à un bras de commutation prédéterminée, le système de commande comprend en outre un dispositif de mesure du courant parcourant l'enroulement de phase prédéterminé et lorsque la tension mesurée par le dispositif de mesure de la tension dépasse une première valeur :
- le circuit de commande ouvre l'interrupteur de côté haut du bras de commutation prédéterminé et met en court-circuit ledit au moins un enroulement de phase prédéterminé, puis
- le dispositif de mesure du courant mesure le courant parcourant la phase prédéterminée,
- si l'intensité du courant mesurée est positive, le circuit de commande ouvre l'interrupteur de côté bas du bras de commutation prédéterminé et ferme l'interrupteur de côté haut du bras de commutation prédéterminé,
- sinon, le circuit de commande ouvre l'interrupteur de côté haut du bras de commutation prédéterminé et ferme l'interrupteur de côté bas du bras de commutation prédéterminé.

Dans un mode particulier de réalisation de l'invention, suite à la mise en court-circuit dudit au moins un enroulement de phase prédéterminé et suite à une détection que la tension mesurée par le dispositif de mesure de la tension dépasse une première valeur prédéterminée et de façon itérative pendant une période prédéterminée ou tant que la tension mesurée par le dispositif de mesure de la tension dépasse une deuxième valeur prédéterminée :
- le dispositif de mesure du courant mesure le courant parcourant la phase prédéterminée,
- si l'intensité du courant mesurée est positive, le circuit de commande ferme l'interrupteur de côté haut du bras de commutation prédéterminé,
- sinon, le circuit de commande ouvre l'interrupteur de côté haut du bras de commutation prédéterminé.

Dans un mode particulier de réalisation de l'invention, suite à la mise en court-circuit dudit au moins un enroulement de phase prédéterminé et suite à une détection que la tension mesurée par le dispositif de mesure de la tension dépasse une première valeur prédéterminée et de façon itérative pendant une période prédéterminée ou tant que la tension mesurée par le dispositif de mesure de la tension dépasse une deuxième valeur prédéterminée :
- le dispositif de mesure du courant mesure le courant parcourant la phase prédéterminée,
- si l'intensité du courant mesurée est positive, le circuit de commande ouvre l'interrupteur de côté bas du bras de commutation prédéterminé et ferme l'interrupteur de côté haut du bras de commutation prédéterminé,
- sinon, le circuit de commande ouvre l'interrupteur de côté haut du bras de commutation prédéterminé et ferme l'interrupteur de côté bas du bras de commutation prédéterminé.

L'invention vise également, selon un cinquième aspect un système électrique comprenant un système de commande selon le deuxième aspect de l'invention et une machine électrique tournante polyphasée et à rotor bobiné commandée par ledit système de commande.

On peut également envisager, dans d'autres modes de réalisation, que le procédé de commande, le système de commande et le système électrique selon l'invention présentent en combinaison tout ou partie des caractéristiques précitées.

### Brève description des dessins :

Des caractéristiques et avantages particuliers de la présente invention ressortiront de la description détaillée faite aux figures dans lesquelles :
La [Fig 1] représente un système électrique conforme à l'invention dans un premier mode de réalisation.
La [Fig 2] représente, sous forme d'ordinogramme, un procédé de commande selon un mode particulier de réalisation de l'invention.
La [Fig. 3] présente sous forme graphique la relation entre le courant mesuré dans une phase en court-circuit et l'état de l'interrupteur de côte haut du bras de commutation associé à cette phase.

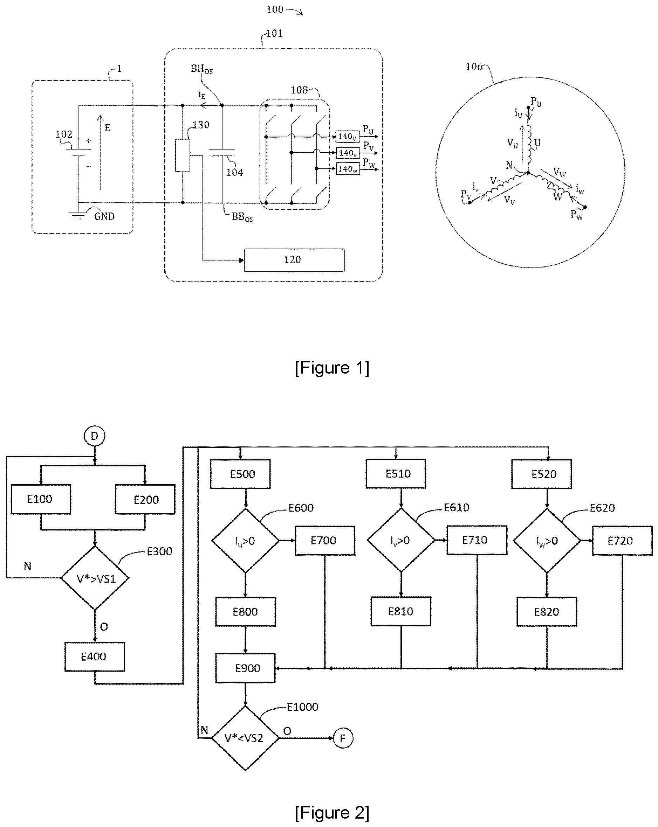

La [Fig 1] représente un système électrique 100 conforme à l'invention dans un premier mode de réalisation. Ce système électrique est par exemple destiné à être utilisé dans un véhicule automobile.

Le système électrique 100 est connecté à un réseau de bord 1 d'un véhicule automobile comprenant au moins une source de tension continue 102. La source de tension continue 102 comporte une borne positive et une borne négative, cette dernière étant généralement connectée à une masse électrique GND, telle qu'un châssis du véhicule automobile. La source de tension continue 102 est conçue pour fournir une tension d'entrée E continue entre ces bornes.

Le système électrique 100 comporte tout d'abord une machine électrique tournante polyphasée 106. Dans l'exemple décrit ici, la machine tournante électrique polyphasé 106 comporte des phases statoriques U, V, W dont, dans l'exemple décrit, des premières extrémités respectives sont connectées à un point neutre N. Dans l'exemple décrit, la machine électrique 106 est une machine électrique triphasée. La machine électrique 106 est par exemple une machine électrique synchrone couplée à une courroie d'alterno-démarreur pour entraîner cette courroie en fonctionnement en tant que moteur et pour être entraînée par la courroie en fonctionnement en tant que génératrice.

Le système électrique 100 comporte en outre un système de commande 101 conforme à l'invention qui comprend :
a) un pont de commande 108 connecté, d'une part, aux bornes de la source source de tension continue 102 et, d'autre part, à la machine électrique 106 pour alimenter les phases statoriques U, V, W de la machine électrique 106 à partir de la source de tension continue 102. Le pont de commande 108 comporte ainsi une borne haute BHos et une borne basse BBos respectivement connectés aux bornes positive et négative de la source de tension continue 102. Le pont de commande 108 est destiné à recevoir ou à fournir un courant statorique i_{E} depuis la borne haute BHos.
b) un circuit électronique de commande 120
c) un dispositif de mesure 130 de la tension entre la borne haute BHos et la borne basse BBos,
d) un dispositif de mesure 140u de mesure de l'intensité du courant Iᵤ circulant dans la phase statorique U,
e) un dispositif de mesure 140v de mesure de l'intensité du courant Iᵥ circulant dans la phase statorique V, et
f) un dispositif de mesure 140_{w} de mesure de l'intensité du courant I_{w} circulant dans la phase statorique W.

Le pont de commande 108 comporte en outre des bras respectivement associés aux phases statoriques U, V, W. Chaque bras comporte un interrupteur de côté haut connecté à la borne haute BHos et un interrupteur de côté bas connecté à la borne basse BBos. L'interrupteur de côté haut et l'interrupteur de côté bas sont en outre connectés l'un à l'autre en un point milieu (Pu, Pv, Pw) connecté à la phase statorique U, V, W associée. Chaque bras est destiné à être commandé pour commuter entre deux configurations. Dans la première, dite configuration haute, l'interrupteur de côté haut est fermé et l'interrupteur de côté bas est ouvert de sorte que la tension d'entrée E est appliquée à une deuxième extrémité de la phase statorique U, V, W associée. Dans la deuxième, dite configuration basse, l'interrupteur de côté haut est ouvert et l'interrupteur de côté bas est fermé de sorte qu'une tension nulle est appliquée à la deuxième extrémité de la phase statorique U, V, W associée. Le pont de commande 108 est commandé par le circuit électronique de commande 120 pour faire commuter chaque bras entre ces deux configurations, de manière à réguler les courants parcourant les phases statoriques U, V, W.

Dans le mode de réalisation décrit ici, les interrupteurs de côté haut et de côté bas du pont de commande 108 sont des transistors à effet de champ à grille isolée plus couramment nommé MOSFET (acronyme anglais de Métal Oxide Semiconductor Field Effect Transistor ).

Le dispositif de mesure 140u du courant circulant dans la phase statorique U de la machine électrique 106 mesure le courant circulant depuis le point milieu Pu vers le point neutre N. Par convention, ce courant est positif lorsque le courant entre dans la phase statorique U à partir du point milieu Pu et négatif sinon.

De même, le dispositif de mesure 140v du courant circulant dans la phase statorique V de la machine électrique 106 mesure le courant circulant depuis le point milieu Pvvers le point neutre N. Par convention, ce courant est positif lorsque le courant entre dans la phase statorique V à partir du point milieu Pv et négatif sinon.

De même, le dispositif de mesure 140w du courant circulant dans la phase statorique W de la machine électrique 106 mesure le courant circulant depuis le point milieu Pw vers le point neutre N. Par convention, ce courant est positif lorsque le courant entre dans la phase statorique W à partir du point milieu Pw et négatif sinon.

Le système électrique 100 comporte en outre une capacité 104 connectée entre les bornes BHos, BBos du pont de commande 108. La capacité 104 comporte par exemple un ou plusieurs condensateurs, par exemple des condensateurs chimiques.

Nous allons maintenant décrire, en référence à la [Fig 2], les principales étapes d'un procédé de commande selon l'invention mis en oeuvre par le système de commande 101 lorsque la machine électrique tournante 106 est dans son mode de fonctionnement en génératrice.

Initialement (étape D) la machine électrique tournante 106 est en mode génératrice.

Le circuit électronique de commande 120 commande alternativement, lors d'une étape E100, à l'ouverture et à la fermeture les interrupteurs de côté bas et de côté haut du pont de commande 108 selon un mode de fonctionnement connu d'un redresseur synchrone.

Parallèlement, lors d'une étape E200, le dispositif de mesure de la tension 130 réalise une mesure V* de la tension entre les bornes haute BHos et basse BBos et communique cette tension mesurée au circuit de commande 120. La tension V* est par exemple obtenu par filtrage de la tension entre les bornes haute BHos et basse BBos pour s'affranchir des ondulations de courant due au redressement et afin d'éviter de fausse détection de pertes de charge.

Lors d'une étape E300, la tension mesurée V* est comparée à une première valeur prédéterminée VS1, par exemple de 58V, par le circuit de commande 120.

Si la tension mesurée V* est inférieure à la première valeur prédéterminée VS1, aucune perte de charge n'est détectée, et le système de commande réalise de nouveau les étapes parallèles E100 et E200.

Si la tension mesurée V* est supérieure à la première valeur prédéterminée VS1, une surtension sur le réseau de bord 1 due par exemple à la déconnexion de la source de tension continue 102 est détectée et le circuit électronique de commande 120, lors d'une étape E400, court-circuite les phases statoriques U, V et W de la machine électrique tournante 106.

Le court-circuit est réalisé en commandant à la fermeture tous les interrupteurs de côtés bas des bras de commutation du pont de commande 108. En d'autres termes, tous les bras de commutation du pont de commande 108 sont dans leur configuration basse.

Puis, lors d'une étape E500, le dispositif de mesure 140u mesure le courant Iᵤ circulant dans la phase statorique U.

Lors d'une étape E600, le courant mesuré Iᵤ est comparé à la valeur nulle par le circuit de commande 120.

Si le courant Iᵤ est positif, lors d'une étape E800, le circuit électronique de commande commande à la fermeture l'interrupteur de côté haut et à l'ouverture l'interrupteur de côté bas du bras de commutation associé à la phase statorique U.

Dans le cas contraire (Iᵤ est négatif ou nul), lors d'une étape E700, le circuit électronique de commande commande à l'ouverture l'interrupteur de côte haut et à la fermeture l'interrupteur de côte bas du bras de commutation associé à la phase statorique U.

Parallèlement aux étapes E500, E600, E700, E800, le procédé, dans le mode de réalisation décrit ici, réalise les étapes E510, E610, E710, E810, E910.

Lors de l'étape E510, le dispositif de mesure 140v mesure le courant Iv circulant dans la phase statorique V.

Lors de l'étape E610, le courant mesuré Iv est comparé à la valeur nulle par le circuit de commande 120.

Si le courant Iv est positif, lors de l'étape E810, le circuit électronique de commande commande à la fermeture l'interrupteur de côté haut et à l'ouverture l'interrupteur de côté bas du bras de commutation associé à la phase statorique V.

Dans le cas contraire (Iv est négatif ou nul), lors de l'étape E710, le circuit électronique de commande commande à l'ouverture l'interrupteur de côte haut et à la fermeture l'interrupteur de côte bas du bras de commutation associé à la phase statorique V.

Parallèlement aux étapes E500, E600, E700, E800 et E510, E610, E710, E810, le procédé, dans le mode de réalisation décrit ici, réalise les étapes E520, E620, E720, E820, E920.

Lors de l'étape E520, le dispositif de mesure 140w mesure le courant Iw circulant dans la phase statorique W.

Lors de l'étape E620, le courant mesuré Iw est comparé à la valeur nulle par le circuit de commande 120.

Si le courant Iw est positif, lors de l'étape E820, le circuit électronique de commande commande à la fermeture l'interrupteur de côté haut et à l'ouverture l'interrupteur de côté bas du bras de commutation associé à la phase statorique W.

Dans le cas contraire (Iw est négatif ou nul), lors de l'étape E720, le circuit électronique de commande commande à l'ouverture l'interrupteur de côte haut et à la fermeture l'interrupteur de côte bas du bras de commutation associé à la phase statorique W.

Après les étapes E700, E710, E720 ou les étapes E800, E810, E820, le dispositif de mesure de la tension 130 réalise, lors d'une étape E900, une mesure V* de la tension entre les bornes haute BHos et basse BBos et communique cette tension mesurée au circuit de commande 120.

Lors d'une étape E1000, la tension mesurée V* est comparées à une deuxième valeur prédéterminée VS2, par exemple de 54V, par le circuit de commande 120.

Si la tension mesurée V* est supérieure à la deuxième valeur prédéterminée VS2, le système de commande réalise de nouveau les étapes parallèles E500-E800, E510-E810, E520-E820 et E900.

Si la tension mesurée V* est inférieure à la deuxième valeur prédéterminée VS2, le procédé de commande s'arrête (étape F).

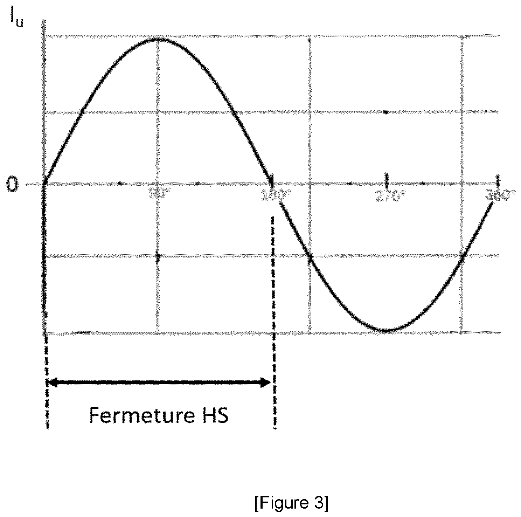

La [Fig. 3] présente sous forme graphique l'évolution du courant Iᵤ mesuré dans l'enroulement de la phase U et précise la période pendant laquelle l'interrupteur de côte haut du bras de commutation associé à la phase statorique U est fermé.

Dans le précédent mode de réalisation du procédé de commande selon l'invention, les étapes E500-E800, E510-E810, E520-E820 et E900 sont réalisées périodiquement tant que la tension mesurée V* est supérieure à la deuxième valeur prédéterminée VS2. En variante, les étapes E500-E800, E510-E810, E520-E820 et E900 sont réalisées périodiquement pendant un intervalle de temps prédéterminé DT, par exemple de 40ms.

Dans le précédent mode de réalisation de l'invention du procédé de commande, les étapes E500-E800, E510-E810, E520-E820 sont réalisée en parallèle pour l'ensemble des phases du stator. En variante, seules les étapes E500-E800 sont réalisées. En d'autres termes, dans cette variante seul l'intensité du courant Iᵤ mesurée dans l'enroulement de la phase U est prise en compte par le procédé de commande.

Naturellement, l'invention n'est pas limitée aux modes de réalisation décrits en référence aux figures et des variantes pourraient être envisagées sans sortir du cadre de l'invention tel que défini par les revendications.

Par exemple, dans les modes de réalisation précédemment décrit, les transistors sont tous des MOSFET. En variante, ces transistors peuvent être des transistors bipolaires à grille isolée (IGBT, de l'anglais « Insulated Gate Bipolar Transistor »).

## Revendications

1. Procédé de commande d'une machine électrique tournante polyphasée (106) dont le stator est piloté par un pont de commande (108) comprenant une pluralité de bras de commutation montés en parallèle, chaque bras comprenant un interrupteur de côté haut et un interrupteur de côté bas connectés l'un à l'autre en un point milieu lui-même connecté à une phase (U, V, W) de ladite machine électrique tournante, ladite machine électrique tournante fonctionnant en génératrice et étant reliée à un réseau électrique (1), notamment à un réseau de bord d'un véhicule automobile, ledit procédé comprenant une étape (E400) de mise en court-circuit d'au moins un enroulement de phase du stator lorsque une mesure (V*) de la tension dudit réseau dépasse une première valeur prédéterminée (VS1), ledit procédé étant en outre **caractérisé en ce qu'**il comporte, successivement à l'étape de mise en court-circuit (E400), une étape d'activation (E500, E600, E700, E800) d'un bras de commutation dont le point milieu est connecté audit au moins un enroulement de phase court-circuité au cours de laquelle :
- l'intensité dans l'enroulement court-circuité est mesurée,
- si l'intensité mesurée correspond à un courant entrant dans ledit enroulement court-circuité depuis le point milieu connecté à ledit au moins un enroulement court-circuité, l'interrupteur de côté haut dudit bras de commutation activé est actionné en position fermé et l'interrupteur de côté bas dudit bras de commutation activé est actionné en position ouverte,
- sinon, l'interrupteur de côté haut dudit bras de commutation activé est actionné en position ouverte, et l'interrupteur de côté bas dudit bras de commutation activé est actionné en position fermé.

2. Procédé de commande selon la revendication précédente dans lequel la mesure de la tension dudit réseau est obtenue par filtrage de la tension dudit réseau avec une constante de temps prédéterminée.

3. Procédé de commande selon l'une des revendications précédentes dans lequel l'étape d'activation est répétée au moins jusqu'à ce que la tension mesurée par le dispositif de mesure de tension soit inférieure à une deuxième valeur prédéterminée (VS2).

4. Procédé de commande selon l'une des revendications 1 à 3 dans lequel ladite étape d'activation est répétée pendant une période temporelle prédéterminée.

5. Procédé de commande selon l'une des revendications précédentes dans lequel tous les enroulements de phase du stator sont court-circuités lors de l'étape de court-circuit et dans lequel successivement à l'étape de mise en court-circuit, l'étape d'activation est réalisée pour tous les bras de commutation.

6. Système de commande (101) d'une machine électrique tournante polyphasée (106) fonctionnant en génératrice et reliée à un réseau électrique (1) par une première et une deuxième borne d'alimentation, ledit réseau électrique (1) étant notamment un réseau de bord d'un véhicule automobile, ledit système de commande (101) comprenant :
- un pont de commande (108) comprenant une pluralité de bras de commutation montés en parallèle, chaque bras comprenant un interrupteur de côté haut et un interrupteur de côté bas connectés l'un à l'autre en un point milieu lui-même connecté à un enroulement de phase de ladite machine électrique tournante, ledit pont de commande (108) étant apte à alimenter en tension ledit réseau électrique,
- un circuit de commande (120) apte à ouvrir ou à fermer les interrupteurs du pont de commande (108),
- un dispositif (130) de mesure de la tension entre la première et la deuxième borne d'alimentation,
le système de commande (101) est **caractérisé en ce que**, pour au moins un enroulement de phase prédéterminé (U) et relié à un bras de commutation prédéterminée, le système de commande (101) comprend en outre un dispositif de mesure du courant (140u) parcourant l'enroulement de phase prédéterminé et lorsque la tension mesurée (V*) par le dispositif de mesure de la tension dépasse une première valeur (VS1) :
- le circuit de commande (120) ferme l'interrupteur de côté bas du bras de commutation prédéterminé et ouvre l'interrupteur de côté haut du bras de commutation prédéterminé,
- le dispositif de mesure du courant (140u) mesure le courant parcourant la phase prédéterminée,
- si l'intensité du courant mesurée (I_{U}) correspond à un courant (I_{U}) entrant dans la phase prédéterminée depuis le point milieu connecté à ladite phase prédéterminée, le circuit de commande (120) ferme l'interrupteur de côté haut du bras de commutation prédéterminé et ouvre l'interrupteur de côté bas du bras de commutation prédéterminé,
- sinon, le circuit de commande (120) ouvre l'interrupteur de côté haut du bras de commutation prédéterminé et ferme l'interrupteur de côté bas du bras de commutation prédéterminé.

7. Système de commande selon la revendication précédente dans lequel, suite à une détection que la tension mesurée par le dispositif de mesure de la tension dépasse une première valeur prédéterminée et de façon itérative pendant une période prédéterminée ou tant que la tension mesurée par le dispositif de mesure de la tension dépasse une deuxième valeur prédéterminée :
le dispositif de mesure du courant (140u) mesure le courant parcourant la phase prédéterminée,
- si l'intensité du courant mesurée (I_{U}) correspond à un courant entrant dans la phase prédéterminée depuis le point milieu connecté à ladite phase prédéterminée, le circuit de commande (120) ferme l'interrupteur de côté haut du bras de commutation prédéterminé et ouvre l'interrupteur de côté bas du bras de commutation prédéterminé,
- sinon, le circuit de commande (120) ouvre l'interrupteur de côté haut du bras de commutation prédéterminé et ferme l'interrupteur de côté bas du bras de commutation prédéterminé.

8. Système de commande selon la revendication 6 ou 7 **caractérisé en ce qu'**il comprend en outre pour chaque phase (U, V, W) un dispositif de mesure du courant (140u, 140v, 140w) parcourant cette phase et **en ce que** pour chaque phase :
- le circuit de commande (120) ferme l'interrupteur de côté bas du bras de commutation connecté par son point milieu à cette phase et ouvre l'interrupteur de côté haut du bras de commutation connecté par son point milieu à cette phase,
- le dispositif de mesure du courant (140u, 140v, 140w) mesure le courant parcourant cette phase (U, V, W),
- si l'intensité du courant mesurée dans cette phase (I_{U}, I_{V}, I_{W}) correspond à un courant entrant dans cette phase depuis le point milieu connecté à cette phase, le circuit de commande (120) ferme l'interrupteur de côté haut du bras de commutation connecté par son point milieu à cette phase et ouvre l'interrupteur de côté bas du bras de commutation connecté par son point milieu à cette phase,
- sinon, le circuit de commande (120) ouvre l'interrupteur de côté haut du bras de commutation connecté par son point milieu à cette phase et ferme l'interrupteur de côté bas du bras de commutation connecté par son point milieu à cette phase.

9. Système électrique (100) comprenant un système de commande (101) selon l'une quelconque des revendications 6 à 8 et une machine électrique tournante (106) polyphasée et à rotor bobiné commandée par ledit système de commande (101).

## Patentansprüche

1. Verfahren zur Steuerung einer mehrphasigen elektrischen Rotationsmaschine (106), deren Stator durch eine Steuerbrücke (108) angesteuert wird, die eine Vielzahl parallel geschalteter Schaltarme beinhaltet, wobei jeder Arm einen High-Side-Schalter und einen Low-Side-Schalter beinhaltet, die in einem Mittelpunkt miteinander verbunden sind, welcher wiederum mit einer Phase (U, V, W) der elektrischen Rotationsmaschine verbunden ist, wobei die elektrische Rotationsmaschine als Generator arbeitet und an ein elektrisches Netz (1), insbesondere ein Bordnetz eines Kraftfahrzeugs, angeschlossen ist, wobei das Verfahren einen Schritt (E400) des Kurzschließens mindestens einer Phasenwicklung des Stators beinhaltet, wenn eine Messung (V*) der Spannung des Netzes einen ersten vorgegebenen Wert (VS1) überschreitet, wobei das Verfahren ferner **dadurch gekennzeichnet ist, dass** es im Anschluss an den Schritt des Kurzschließens (E400) einen Schritt des Aktivierens (E500, E600, E700, E800) eines Schaltarms umfasst, dessen Mittelpunkt mit der mindestens einen kurzgeschlossenen Phasenwicklung verbunden ist, während dessen:
- die Stärke in der kurzgeschlossenen Wicklung gemessen wird,
- wenn die gemessene Stärke einem Strom entspricht, der von dem Mittelpunkt, der mit der mindestens einen kurzgeschlossenen Wicklung verbunden ist, in die kurzgeschlossene Wicklung eintritt, der High-Side-Schalter des aktivierten Schaltarms in die geschlossene Stellung gebracht wird und der Low-Side-Schalter des aktivierten Schaltarms in die geöffnete Stellung gebracht wird,
- und andernfalls der High-Side-Schalter des aktivierten Schaltarms in die geöffnete Stellung gebracht wird und der Low-Side-Schalter des aktivierten Schaltarms in die geschlossene Stellung gebracht wird.

2. Steuerungsverfahren nach dem vorhergehenden Anspruch, wobei die Messung der Spannung des Netzes durch das Filtern der Spannung des Netzes mit einer vorgegebenen Zeitkonstante erhalten wird.

3. Steuerungsverfahren nach einem der vorhergehenden Ansprüche, wobei der Schritt des Aktivierens mindestens so lange wiederholt wird, bis die durch die Spannungsmessvorrichtung gemessene Spannung unter einem zweiten vorgegebenen Wert (VS2) liegt.

4. Steuerungsverfahren nach einem der Ansprüche 1 bis 3, wobei der Schritt des Aktivierens während einer vorgegebenen Zeitdauer wiederholt wird.

5. Steuerungsverfahren nach einem der vorhergehenden Ansprüche, wobei während des Schritts des Kurzschließens alle Phasenwicklungen des Stators kurzgeschlossen werden und wobei im Anschluss an den Schritt des Kurzschließens der Schritt des Aktivierens für alle Schaltarme durchgeführt wird.

6. Steuerungssystem (101) einer mehrphasigen elektrischen Rotationsmaschine (106), die als Generator arbeitet und über einen ersten und einen zweiten Versorgungsanschluss an ein elektrisches Netz (1) angeschlossen ist, wobei das elektrische Netz (1) insbesondere ein Bordnetz eines Kraftfahrzeugs ist, wobei das Steuerungssystem (101) Folgendes beinhaltet:
- eine Steuerbrücke (108), die eine Vielzahl parallel geschalteter Schaltarme beinhaltet, wobei jeder Arm einen High-Side-Schalter und einen Low-Side-Schalter beinhaltet, die in einem Mittelpunkt miteinander verbunden sind, welcher wiederum mit einer Phasenwicklung der elektrischen Rotationsmaschine verbunden ist, wobei die Steuerbrücke (108) dazu fähig ist, das elektrische Netz mit Spannung zu versorgen,
- eine Steuerungsschaltung (120), die dazu fähig ist, die Schalter der Steuerbrücke (108) zu öffnen oder zu schließen,
- eine Vorrichtung (130) zum Messen der Spannung zwischen dem ersten und dem zweiten Versorgungsanschluss,
wobei das Steuerungssystem (101) **dadurch gekennzeichnet ist, dass** das Steuerungssystem (101) für mindestens eine vorgegebene Phasenwicklung (U), die mit einem vorgegebenen Schaltarm verbunden ist, ferner eine Vorrichtung zum Messen des Stroms (140u), der durch die vorgegebene Phasenwicklung fließt, beinhaltet, und wenn die durch die Spannungsmessvorrichtung gemessene Spannung (V*) einen ersten Wert (VS1) überschreitet:
- die Steuerungsschaltung (120) den Low-Side-Schalter des vorgegebenen Schaltarms schließt und den High-Side-Schalter des vorgegebenen Schaltarms öffnet,
- die Vorrichtung zum Messen des Stroms (140u) den Strom, der durch die vorgegebene Phase fließt, misst,
- wenn die Stärke des gemessenen Stroms (Iu) einem Strom (Iu) entspricht, der von dem mit der vorgegebenen Phase verbundenen Mittelpunkt in die vorgegebene Phase eintritt, die Steuerungsschaltung (120) den High-Side-Schalter des vorgegebenen Schaltarms schließt und den Low-Side-Schalter des vorgegebenen Schaltarms öffnet,
- und andernfalls die Steuerungsschaltung (120) den High-Side-Schalter des vorgegebenen Schaltarms öffnet und den Low-Side-Schalter des vorgegebenen Schaltarms schließt.

7. Steuerungssystem nach dem vorhergehenden Anspruch, wobei im Anschluss an ein Detektieren, dass die durch die Spannungsmessvorrichtung gemessene Spannung einen ersten vorgegebenen Wert überschreitet, und auf iterative Weise während einer vorgegebenen Zeitdauer oder so lange, wie die durch die Spannungsmessvorrichtung gemessene Spannung einen zweiten vorgegebenen Wert überschreitet:
die Vorrichtung zum Messen des Stroms (140u) den Strom, der durch die vorgegebene Phase fließt, misst,
- wenn die Stärke des gemessenen Stroms (Iu) einem Strom entspricht, der von dem mit der vorgegebenen Phase verbundenen Mittelpunkt in die vorgegebene Phase eintritt, die Steuerungsschaltung (120) den High-Side-Schalter des vorgegebenen Schaltarms schließt und den Low-Side-Schalter des vorgegebenen Schaltarms öffnet,
- und andernfalls die Steuerungsschaltung (120) den High-Side-Schalter des vorgegebenen Schaltarms öffnet und den Low-Side-Schalter des vorgegebenen Schaltarms schließt.

8. Steuerungssystem nach Anspruch 6 oder 7, **dadurch gekennzeichnet, dass** es ferner für jede Phase (U, V, W) eine Vorrichtung zum Messen des Stroms (140u, 140v, 140w), der durch diese Phase fließt, beinhaltet, und dass für jede Phase:
- die Steuerungsschaltung (120) den Low-Side-Schalter des Schaltarms, der durch seinen Mittelpunkt mit dieser Phase verbunden ist, schließt und den High-Side-Schalter des Schaltarms, der durch seinen Mittelpunkt mit dieser Phase verbunden ist, öffnet,
- die Vorrichtung zum Messen des Stroms (140u, 140v, 140w) den Strom, der durch diese Phase (U, V, W) fließt, misst,
- wenn die Stärke des in dieser Phase gemessenen Stroms (Iu, Iv, Iw) einem Strom entspricht, der von dem mit dieser Phase verbundenen Mittelpunkt in diese Phase eintritt, die Steuerungsschaltung (120) den High-Side-Schalter des Schaltarms, der durch seinen Mittelpunkt mit dieser Phase verbunden ist, schließt und den Low-Side-Schalter des Schaltarms, der durch seinen Mittelpunkt mit dieser Phase verbunden ist, öffnet,
- und andernfalls die Steuerungsschaltung (120) den High-Side-Schalter des Schaltarms, der durch seinen Mittelpunkt mit dieser Phase verbunden ist, öffnet und den Low-Side-Schalter des Schaltarms, der durch seinen Mittelpunkt mit dieser Phase verbunden ist, schließt.

9. Elektrisches System (100), das ein Steuerungssystem (101) nach einem beliebigen der Ansprüche 6 bis 8 und eine mehrphasige elektrische Rotationsmaschine (106) mit bewickeltem Rotor, die durch das Steuerungssystem (101) gesteuert wird, beinhaltet.

## Claims

1. Method for controlling a multi-phase rotary electric machine (106), the stator of which is controlled by a control bridge (108) comprising a plurality of parallel-mounted switching arms, each arm comprising a high-side switch and a low-side switch connected to one another at a centre tap, which is itself connected to a phase (U, V, W) of said rotary electric machine, said rotary electric machine operating as a generator and being connected to an electrical network (1), notably to an on-board network of a motor vehicle, said method comprising a step (E400) of short-circuiting at least one phase winding of the stator when a measurement (V*) of the voltage of said network exceeds a first predetermined value (VS1), said method being further **characterized in that** it comprises, following the short-circuiting step (E400), a step (E500, E600, E700, E800) of activating a switching arm, the centre tap of which is connected to said at least one short-circuited phase winding, during which step:
- the intensity in the short-circuited winding is measured,
- if the measured intensity corresponds to a current entering said short-circuited winding from the centre tap connected to said at least one short-circuited winding, the high-side switch of said activated switching arm is moved to the closed position and the low-side switch of said activated switching arm is moved to the open position,
- otherwise, the high-side switch of said activated switching arm is moved to the open position, and the low-side switch of said activated switching arm is moved to the closed position.

2. Control method according to the preceding claim, wherein the measurement of the voltage of said network is obtained by filtering the voltage of said network with a predetermined time constant.

3. Control method according to one of the preceding claims, wherein the activation step is repeated at least until the voltage measured by the voltage measurement device is less than a second predetermined value (VS2).

4. Control method according to one of Claims 1 to 3, wherein said activation step is repeated for a predetermined time period.

5. Control method according to one of the preceding claims, wherein all the phase windings of the stator are short-circuited during the short-circuiting step and wherein, following the short-circuiting step, the activation step is carried out for all the switching arms.

6. System (101) for controlling a multi-phase rotary electric machine (106) operating as a generator and connected to an electrical network (1) by a first and a second power supply terminal, said electrical network (1) notably being an on-board network of a motor vehicle, said control system (101) comprising:
- a control bridge (108) comprising a plurality of parallel-mounted switching arms, each arm comprising a high-side switch and a low-side switch connected to one another at a centre tap, which is itself connected to a phase winding of said rotary electric machine, said control bridge (108) being capable of supplying said electrical network with voltage;
- a control circuit (120) which is capable of opening or of closing the switches of the control bridge (108);
- a device (130) for measuring the voltage between the first and the second power supply terminal;
the control system (101) being **characterized in that**, for at least one predetermined phase winding (U) connected to a predetermined switching arm, the control system (101) further comprises a device (140u) for measuring the current flowing through the predetermined phase winding and, when the voltage (V*) measured by the voltage measurement device exceeds a first value (VS1):
- the control circuit (120) closes the low-side switch of the predetermined switching arm and opens the high-side switch of the predetermined switching arm;
- the current measurement device (140_{U}) measures the current flowing through the predetermined phase;
- if the intensity of the measured current (I_{U}) corresponds to a current (I_{U}) entering the predetermined phase from the centre tap connected to said predetermined phase, the control circuit (120) closes the high-side switch of the predetermined switching arm and opens the low-side switch of the predetermined switching arm;
- otherwise, the control circuit (120) opens the high-side switch of the predetermined switching arm and closes the low-side switch of the predetermined switching arm.

7. Control system according to the preceding claim, wherein, following it being detected that the voltage measured by the voltage measurement device exceeds a first predetermined value and iteratively for a predetermined period or as long as the voltage measured by the voltage measurement device exceeds a second predetermined value:
the current measurement device (140_{U}) measures the current flowing through the predetermined phase;
- if the intensity of the measured current (I_{U}) corresponds to a current entering the predetermined phase from the centre tap connected to said predetermined phase, the control circuit (120) closes the high-side switch of the predetermined switching arm and opens the low-side switch of the predetermined switching arm,
- otherwise, the control circuit (120) opens the high-side switch of the predetermined switching arm and closes the low-side switch of the predetermined switching arm.

8. Control system according to Claim 6 or 7, **characterized in that** it further comprises, for each phase (U, V, W), a device (140u, 140v, 140w) for measuring the current flowing through this phase and **in that**, for each phase:
- the control circuit (120) closes the low-side switch of the switching arm connected by its centre tap to this phase and opens the high-side switch of the switching arm connected by its centre tap to this phase;
- the current measurement device (140_{U}, 140_{V}, 140_{W}) measures the current flowing through this phase (U, V, W) ;
- if the intensity of the current (I_{U}, I_{V}, I_{W}) measured in this phase corresponds to a current entering this phase from the centre tap connected to this phase, the control circuit (120) closes the high-side switch of the switching arm connected by its centre tap to this phase and opens the low-side switch of the switching arm connected by its centre tap to this phase;
- otherwise, the control circuit (120) opens the high-side switch of the switching arm connected by its centre tap to this phase and closes the low-side switch of the switching arm connected by its centre tap to this phase.

9. Electrical system (100) comprising a control system (101) according to any one of Claims 6 to 8 and a multi-phase and coiled-rotor rotary electric machine (106) controlled by said control system (101).
